# EUROPEAN PATENT APPLICATION

(11) **EP 0 970 737 A2**
(43) Date of publication of application: **12.01.2000**
(21) Application number: 99113066.7
(22) Date of filing: 06.07.1999
(51) Int. Cl.: B01D 53/94, B01J 29/06

(54) **Catalyst for purifying exhaust gas and process for producing the same**

(30) Priority: 07.07.1998 JP 19204798; 10.08.1998 JP 22626998
(71) Applicant: TOYOTA JIDOSHA KABUSHIKI KAISHA, Aichi-ken 471-8571 (JP)
(72) Inventor: Takada, Toshihiro, Toyota-shi, Aichi-ken, 471-8571 (JP); Takagi, Nobuyuki, Toyota-shi, Aichi-ken, 471-8571 (JP)
(74) Representative: Winter, Brandl & Partner

(57) **Abstract**

A catalyst for purifying an exhaust gas includes a support, an oxygen storage-and-release member, and a noble metal. The support includes a zeolite, whose silicon-to-aluminum (Si/Al) molar ratio is 150 or less, and a metallic oxide support. The noble metal is loaded at least on the support and outside the pores of the zeolite. Thus, no noble metal is loaded in the pores of the zeolite. Accordingly, sulfates are inhibited from generating in the pores, and the pores are inhibited from being closed by the sulfates. Hence, even after a durability test, the catalyst keeps to exhibit a high HC adsorbing ability, and is improved in terms of the NOₓ purifying ability. Two processes for producing the catalyst are also disclosed.

## Description

### BACKGROUND OF THE INVENTION

### Field of the Invention

The present invention relates to a catalyst for purifying an exhaust gas and a process for producing the same. The catalyst is used in the exhaust system of an automobile, and purifies harmful components in the exhaust gas. More particularly, the present invention relates to a catalyst, which can efficiently purify HC and NOₓ contained in the exhaust gas, and a process for producing the same.

In particular, the present exhaust-gas purifying catalyst can be appropriately used in a diesel engine, a lean-burn engine and a common-rail engine in which a hydrocarbon is supplied into and burned in the cylinder together with an air-fuel mixture.

### Description of the Related Art

Conventionally, a 3-way catalyst is used as a catalyst for purifying an automobile exhaust gas. The 3-way catalyst oxidizes CO and HC in the exhaust gas, and simultaneously reduces NOₓ at the ideal air-fuel ratio (or the stoichiometric ratio). Such a 3-way catalyst, the following catalyst has been known widely. For example, a porous support layer including γ -alumina is formed on a heat resistant substrate including cordierite. Then, a noble metal, such as platinum (Pt) and rhodium (Rh), is loaded on the porous support layer.

On the other hand, the exhaust gases, which are emitted from diesel engines and lean-burn engines, contain an oxygen gas in a large amount. Accordingly, the oxidation of HC, etc., occurs with ease relatively. However, there arises a problem in that a 3-way catalyst, which is used usually with a gasoline engine, exhibits a considerably low NOₓ purifying efficiency. Hence, there have been proposed recently that a hydrocarbon, such as a light oil, is supplied in a small amount in order to reduce and purify NOₓ which is emitted, for example, from a diesel engine. Moreover, in lean-burn engines, the reduction of NOₓ is facilitated by occasionally supplying a fuel-rich air-fuel mixture in a pulsating manner.

As an NOₓ-selective-reduction type exhaust-gas purifying catalyst for selectively reducing and purifying NOₓ, a catalyst has been known which is prepared by loading a noble metal on a zeolite. A zeolite is acidic because it has many acidic sites. Accordingly, a zeolite is good in the HC adsorbing ability, and adsorbs HC contained in an exhaust gas. Therefore, even if the catalyst is placed in an oxygen-rich exhaust gas, the atmosphere adjacent to the catalyst is the stoichiometric atmosphere or a fuel-rich atmosphere in which HC is present abundantly. Consequently, HC is adsorbed on the zeolite, is released from the zeolite, and is reacted with NOₓ by the catalytic action of the loaded noble metal. Thus, NOₓ is reduced and purified.

Moreover, a zeolite exhibits a cracking action. Zeolites, such as mordenite, ZSM-5 and an ultra-stable type "Y" zeolite (i.e., US-Y), exhibit especially high cracking actions. Therefore, when these zeolites are used as catalyst supports, SOF (i.e., Soluble Organic Fraction), which is contained in a diesel exhaust gas, is cracked to low molecular-weight HC, which is more likely to react than SOF. Thus, NOₓ can be reduced and purified further efficiently.

Chemically, a zeolite is tectoaluminosilicate, and is one of crystalline silica porous substances. Many zeolites have been known which have a variety of SiO₂/Al₂O₃ ratios. It has been found that, depending on the values of the SiO₂/Al₂O₃ ratio, the catalytic characteristics of zeolites vary greatly.

For example, a zeolite, which has a small SiO₂/Al₂O₃ ratio, has many ion-exchange sites, and exhibits a high cracking ability and a high HC adsorbing ability. Consequently, a catalyst, which is made by loading a noble metal on the zeolite, is good in the HC purifying ability and the NOₓ purifying ability. Therefore, in conventional exhaust-gas purifying catalysts, zeolites, which have small SiO₂/Al₂O₃ molar ratios of from 20 to 100, are employed generally.

Whilst, cerium oxide (ceria) is known as an oxygen storage-and-release member because it exhibits an action of storing and releasing oxygen. Ceria is used widely as a co-catalyst. When ceria is used at elevated temperatures, the specific surface area of ceria decreases so that the oxygen storage-and-release ability of ceria decreases. In order to inhibit the disadvantage, a solid solution is used in which the oxide of zirconium or a rare-earth element other than cerium is solved in ceria.

For instance, a 3-way catalyst is used under the condition that the air/fuel (A/F) ratio is controlled substantially at the ideal air-fuel ratio. However, in a transition area, the actual air-fuel ratio deviates from the ideal air-fuel ratio. In this instance, when a catalyst containing an oxygen storage-and-release member, such as ceria, is used, the air-fuel ratio can be controlled adjacent to the ideal air-fuel ratio by the oxygen storage-and-release action of ceria. Thus, the width of the air-fuel ratio (i.e., window) is widened, and the purifying performance of such a catalyst is improved. Moreover, since the partial pressure of oxygen is adjusted to a constant value approximately, there arises an advantage in that the noble metal, the catalyst component, is inhibited from growing granularly.

Japanese Unexamined Patent Publication (KOKAI) No. 8-155,302, for example, discloses such a catalyst. The catalyst is an exhaust-gas purifying catalyst in which a noble metal and ceria are loaded on a porous support. The ceria has an average particle diameter which falls in the range of from 5 to 100 nm. When ceria is loaded as fine particles in a highly dispersed manner, ceria effects a high oxygen storage-and-release ability because the surface area enlarges. Moreover, when ceria is loaded as a ceria-zirconia composite oxide, ceria is inhibited from decreasing the surface area so that the durability is enhanced.

Hence, it is possible to think of an exhaust-gas purifying catalyst which is provided with both of the oxygen storage-and-release member, such as ceria, and the zeolite. For instance, Japanese Unexamined Patent Publication (KOKAI) No. 9-155,192 exemplifies an exhaust-gas purifying catalyst. The catalyst comprises a support, which includes a zeolite and an oxygen storage-and-release member, and a noble metal, which is loaded on the support.

In such a catalyst, the oxygen storage-and-release member stores oxygen, which is contained excessively in an exhaust gas, in a low temperature range. When the temperature is increased, the oxygen storage-and-release member releases oxygen. The thus released oxygen exhibits a high activity, and reacts with HC adsorbed on the zeolite to activate the HC. Since the thus activated HC exhibits a high activity, it is believed that the HC reacts with NOₓ to reduce and purify NOₓ even in a low temperature range. Thus, the catalyst is upgraded in terms of the NOₓ purifying ability.

However, when a noble metal is loaded in the pores of a zeolite, SO₂ contained in an exhaust gas is further oxidized in the pores to produce sulfates. Hence, a drawback has been revealed to occur. Namely, there arises poisoning in which the resulting sulfates cause the noble metal to lose the activity. There arises another drawback. Namely, the sulfates close the pores so that it is difficult for HC to adsorb onto the pores. There arises still another drawback. Namely, HC is inhibited from adsorbing on the zeolite by the heat of reaction which results from the oxidation of HC. As a consequence of these drawbacks occurring one after another, there arises a crucial drawback in that the durability of the catalyst decreases.

Moreover, in the catalyst in which the zeolite coexists with the oxygen storage-and-release member, it is difficult to suppress the local fuel-enrichment adjacent to the noble metal. The local fuel-enrichment occurs due to the elimination of adsorbed HC when the zeolite is present in a large amount. Accordingly, the oxidation reaction of HC is less likely to be caused by the noble metal. As a result, the catalyst exhibits a decreased NOₓ purifying ability. On the other hand, when the oxygen storage-and-release member is present in a large amount, the HC adsorbing ability decreases because the zeolite is present in a small amount. Consequently, it is difficult for the catalyst to secure a sufficient NOₓ purifying ability. In addition, these reactions exhibit temperature dependencies, respectively, and the active temperatures differ from each other.

For instance, in the catalyst which is provided with both of the zeolite and the oxygen storage-and-release member, it is difficult to balance the actions of the zeolite and the oxygen-and-release member. Namely, it is difficult to effect the characteristics of both of the zeolite and the oxygen storage-and-release member.

In addition, when a zeolite, which has a small SiO₂/Al₂O₃ ratio and many ion-exchange sites, is subjected to a hydrothermal durability test, there arises a drawback in that the acidic sites are lost readily by the elimination of Al so that the cracking ability decreases. The elimination of Al results in the change in the zeolite structure from the tetra-coordination to the hexa-coordination. Moreover, when a catalyst is made by loading a noble metal on such a zeolite by an ion exchange method, the resulting catalyst suffers from the following problems. For instance, when the catalyst is subjected to a hydrothermal durability test, the zeolite structure is destroyed by the elimination of Al, and simultaneously the noble metal grows granularly. As a result, the catalyst exhibits a considerably decreased catalytic activity, and is poor in the durability.

Hence, Japanese Unexamined Patent Publication (KOKAI) No. 4-176,337 discloses an exhaust-gas purifying catalyst which is made by loading a noble metal on a high silica-content zeolite whose Si/Al molar ratio falls in the range of from 40 or more to less than 1,000. The Si/Al molar ratio is converted into an SiO₂/Al₂O₃ molar ratio of from 80 or more to less than 2,000. In such a zeolite having a large Si/Al ratio, the granular growth of the noble metal (i.e., sintering), which is caused by the elimination of Al, is suppressed.

However, in a zeolite having a large Si/Al ratio, since the ion-exchange sites exist in a small quantity, it is difficult to sufficiently load the noble metal. Accordingly, the catalyst suffers from a drawback in that it exhibits a low NOₓ purifying ability even at the initial stage of the service. Moreover, the loading of the noble metal is concentrated on the ion-exchange sites which exist in a reduced quantity. Consequently, it is difficult to load the noble metal in a highly dispersed manner. In addition, since the noble metal is likely to move on the zeolite, the sintering is likely to occur after the catalyst is subjected to a durability test. Thus, it cannot be said that the catalyst is good in the durability.

By the way, when a noble metal is loaded on a zeolite, it is a general method that a solution containing the noble metal ions is brought into contact with the zeolite to cause ion exchange. With this method, it is possible to uniformly load the noble metal on the zeolite.

When a noble metal is loaded by an ion-exchange method as aforementioned, the noble metal is loaded even into the pores of a zeolite. However, when the noble metal is thus loaded into the pores, and when the noble metal is put in the service as an catalyst, SOF contained in an exhaust gas intrudes into the pores. A part of or all of SOF decomposes to consume oxygen in the pores. The resulting decomposed products cover the noble metal to poison the noble metal. Consequently, there arises a drawback in that the catalytic activity of the noble metal decreases so that the purifying performance decreases (hereinafter this phenomenon is referred to as an HC poisoning). Due to this HC poisoning, the reactivity decreases particularly between HC and NOₓ contained in an exhaust gas, and accordingly the NOₓ conversion decreases to a greater extent.

### SUMMARY OF THE INVENTION

The present invention has been developed in view of the aforementioned circumstances. It is therefore an object of the present invention to increase the HC adsorbing ability by employing a zeolite whose silicon-to-aluminum (Si/Al) ratio is small and to inhibit the sulfates from generating in the pores of the zeolite.

It is a further object of the present invention to improve the NOₓ purifying ability by satisfying both of the performances, i.e., the suppression of the local fuel-enrichment and the securing of the HC adsorbing ability.

In an exhaust-gas purifying catalyst which is prepared by loading a noble metal on an oxide support, it is a furthermore object of the present invention to inhibit the catalytic activity from decreasing and to improve the NOₓ conversion by inhibiting the noble metal from sintering and by suppressing the HC poisoning of the noble metal in the pores of the oxide support.

In a first aspect of the present invention, a catalyst for purifying an exhaust gas, comprising:
a support including a zeolite, whose silicon-to-aluminum (Si/Al) molar ratio is 150 or less, and a metallic oxide support;
an oxygen storage-and-release member; and
a noble metal loaded at least on the support;
   wherein the noble metal is loaded outside the pores of the zeolite.

In a second aspect of the present invention, the oxygen storage-and-release member includes a ceria-zirconia composite oxide whose zirconium-to-cerium (Zr/Ce) molar ratio is 1 or less; and the ceria content falls in the range of from 2 to 45% by weight with respect to the zeolite.

In a third aspect of the present invention, a process for producing a catalyst for purifying an exhaust gas, the catalyst comprising a zeolite and a noble metal loaded on the zeolite,
wherein a noble metal compound whose molecular diameter is larger than the pore diameter of the zeolite is employed to load the noble metal.

In a fourth aspect of the present invention, a catalyst for purifying an exhaust gas, comprising:
an oxide support having pores of molecular levels;
a catalyst carrier layer formed on the surface of the oxide support, and including a metallic oxide; and
a noble metal loaded on the catalyst carrier layer;
   wherein the catalyst carrier layer is formed mainly on portions excepting the pores of the oxide support.

In a fifth aspect of the present invention, a process for producing a catalyst for purifying an exhaust gas, comprising the steps of:
preparing an alcohol solution which includes an oxide support powder, having pores of molecular levels, and a metallic alkoxide;
hydrolyzing the metallic alkoxide in the alcohol solution;
drying and calcining the resulting mixture, thereby forming a catalyst carrier layer, which includes a metallic oxide, on the surface of the oxide support powder; and
loading a noble metal on the catalyst carrier layer;
   wherein a metallic alkoxide whose molecular diameter is larger in the alcohol solution than the diameters of the pores of the oxide support powder is employed as the metallic alkoxide.

In accordance with the first aspect of the present invention, the present exhaust-gas purifying catalyst is inhibited from exhibiting the decreased HC adsorbing ability which is caused by closing the pores of the zeolite, and is suppressed in terms of the activity decrement of the noble metal. Hence, the present exhaust-gas purifying catalyst is extremely good in the durability of the NOₓ purifying performance, and accordingly can stably purify NOₓ for a long period of time.

In accordance with the second aspect of the present invention, the present exhaust-gas purifying catalyst can secure a high oxygen releasing ability, and satisfy both of the performances, i.e., the suppression of the local fuel-enrichment and the securing of the HC adsorbing ability. Thus, the present exhaust-gas purifying catalyst is further improved in terms of the NOₓ purifying ability.

In accordance with the third aspect of the present invention, it is possible to securely inhibit the noble metal from being loaded in the pores of the zeolite. Therefore, it is possible to readily and securely produce the present exhaust-gas purifying catalyst.

In accordance with the fourth aspect of the present invention, the noble metal can be loaded in a sufficient amount even when a zeolite having a large Si/Al ratio is employed. Accordingly, it is possible to suppress the sintering of the noble metal, which is caused by the elimination of Al. Moreover, the noble metal is kept from being subjected to the HC poisoning. Thus, the present exhaust-gas purifying catalyst can be improved over the conventional catalysts in terms of the NOₓ purifying ability.

In accordance with the fifth aspect of the present invention, it is possible to stably and securely produce the present exhaust-gas purifying catalyst which produces the aforementioned advantageous effects.

### BRIEF DESCRIPTION OF THE DRAWINGS

A more complete appreciation of the present invention and many of its advantages will be readily obtained as the same becomes better understood by reference to the following detailed description when considered in connection with the accompanying drawings and detailed specification, all of which forms a part of the disclosure:
Fig. 1 shows graphs for illustrating the initial conversions which were exhibited by exhaust-gas purifying catalysts of Example Nos. 1 through 3 according to the present invention and that of Comparative Example No. 1;
Fig. 2 shows graphs for illustrating conversions which were exhibited by the exhaust-gas purifying catalysts of Example Nos. 1 through 3 according to the present invention and that of Comparative Example No. 1 after they were subjected to a durability test carried out at 400 °C;
Fig. 3 shows graphs for illustrating conversions which were exhibited by the exhaust-gas purifying catalysts of Example Nos. 1 through 3 according to the present invention and that of Comparative Example No. 1 after they were subjected to a durability test carried out at 650 °C;
Fig. 4 shows graphs for illustrating conversions which were exhibited by the exhaust-gas purifying catalysts of Example Nos. 1 through 3 according to the present invention and that of Comparative Example No. 1 after they were subjected to a durability test carried out at 800 °C;
Fig. 5 is a schematic cross-sectional view on the major portions of exhaust-gas purifying catalysts of Example Nos. 4 through 6 according to the present invention;
Fig. 6 is a bar graph for illustrating the NOₓ conversions which were exhibited by the exhaust-gas purifying catalysts of Example Nos. 4 through 6 according to the present invention and that of Comparative Example No. 2;
Fig. 7 is a bar graph for illustrating the superficial Pt concentrations which were exhibited by the exhaust-gas purifying catalysts of Example Nos. 4 through 6 according to the present invention and that of Comparative Example No. 2; and
Fig. 8 is a graph for illustrating the relationships between the temperatures and the HC eliminations which were exhibited by the exhaust-gas purifying catalyst of Example No. 6 according to the present invention and that of Comparative Example No. 2.

### DETAILED DESCRIPTION OF THE PREFERRED EMBODIMENTS

Having generally described the present invention, a further understanding can be obtained by reference to the specific preferred embodiments which are provided herein for the purpose of illustration only and not intended to limit the scope of the appended claims.

The present exhaust-gas purifying catalyst according to the first aspect of the present invention employs the zeolite whose silicon-to-aluminum (Si/Al) molar ratio is 150 or less. The zeolite whose Si/Al molar ratio is 150 or less has many acidic sites, and is extremely good in the HC adsorbing ability. A zeolite whose Si/Al molar ratio is in excess of 150 exhibits not only a decreased HC adsorbing ability but also a decreased NOₓ purifying ability. The Si/Al molar ratio can preferably fall in the range of from 30 to 150.

As for the zeolite, it is possible to use a natural or synthetic zeolite, such as mordenite, ZSM-5, type-"Y" zeolite, ferrierite and zeolite β. One of these members can be used independently, or a plurality of these members can be mixed and used.

The noble metal is loaded at least on the support which includes the zeolite and the metallic oxide support. Then, in the present exhaust-gas purifying catalyst, the noble metal is loaded outside the pores of the zeolite. With this arrangement, the sulfates are inhibited from generating in the pores. Accordingly, the HC adsorbing ability is inhibited from decreasing. The decrement in the HC adsorbing ability is induced by the closed pores. In addition, the decrement in the activity of the noble metal is suppressed. All in all, the NOₓ purifying ability is improved, and the durability of the NOₓ purifying ability is upgraded.

It cannot be said, however, that the zeolite exhibits a high loadability with respect to the noble metal. Moreover, since the loaded portions occupy a small area by simply loading the noble metal outside the pores, it is difficult to load the noble metal in a required amount for purifying an exhaust gas. Therefore, in the present exhaust-gas purifying catalyst, the metallic oxide support is used in addition to the zeolite. The required loading amount of the noble metal can be secured by employing the metallic oxide support. As for the metallic oxide support, it is preferable to select at least one member from the group consisting of titania, zirconia and silica. Note that alumina is not preferred because it is likely to adsorb SOₓ, and because there may arise a case where the activity is decreased by the sulfur poisoning.

The noble metal adsorbs oxygen which is present in the atmosphere. Accordingly, there arises the oxygen poisoning in which the activity of the noble metal is degraded because the surface of the noble metal is covered by the oxygen. However, when the noble metal is loaded on the metallic oxide support which includes at least one member selected from the group consisting of titania, zirconia and silica, an advantage has been revealed in that the oxygen poisoning is suppressed compared with the case where the noble metal is loaded on alumina. Hence, when the noble metal is loaded on the metallic oxide support, the activity is inhibited from decreasing. The decrement in the activity is induced by the oxygen poisoning. Thus, a high durability is effected in the present exhaust-gas purifying catalyst.

The mixing ratio of the metallic oxide support with respect to the zeolite can preferably fall in the range of from 1/10 to 3/1 (i.e., metallic oxide support/zeolite = from 1/10 to 3/1) by weight. When the ratio of the metallic oxide support is smaller the range, the loading amount of the noble metal is insufficient. When the ratio of the metallic oxide support is greater than the range, the HC adsorbing ability decreases. Accordingly, in both of the cases, no sufficient NOₓ purifying ability can be obtained.

When the zeolite releases HC, the atmosphere adjacent to the surface of the noble metal is turned into a fuel-rich atmosphere. The oxygen storage-and-release member operates to turn the fuel-rich atmosphere adjacent to the surface of the noble metal into the stoichiometric atmosphere by releasing oxygen. Accordingly, the local fuel-enrichment can be suppressed, and the oxidation reaction of HC is likely to bring about. Hence, the NOₓ purifying ability is improved. In addition, the oxidation of NO to NO₂ is facilitated on the surface of the noble metal, and accordingly the reaction between NOₓ and HC is likely to occur. Therefore, the NOₓ purifying ability is further improved.

The oxygen storage-and-release member can be a part of the support. Alternatively, the oxygen storage-and-release member can be loaded on the support which is composed of a zeolite and a metallic oxide support. Moreover, the noble metal can be loaded on the surface of the oxygen storage-and-release member. With these arrangements, the aforementioned operations of the present exhaust-gas purifying catalyst are carried out smoothly, thereby further improving the NOₓ purifying ability. In addition, the oxygen releasing rate can be upgraded by thus loading the noble metal.

The oxygen storage-and-release member can be an oxide of a rare-earth metal, such as ceria (CeO₂) and PrO₄, or an oxide of a transition metal, such as NiO, Fe₂O₃, CuO and Mn₂O₅. Moreover, it is preferable to employ stabilized ceria which is stabilized by solving zirconia therein.

The ceria-zirconia composite oxide which is stabilized by zirconia has the following characteristics. For example, the ceria-zirconia composite oxide whose zirconium-to-cerium (Zr/Ce) molar ratio is 1 or less (i.e., Zr/Ce ≦ 1) exhibits a high oxygen releasing ability, but is likely to be poisoned by sulfur. On the other hand, the ceria-zirconia composite oxide whose zirconium-to-cerium (Zr/Ce) molar ratio is more than 1 (i.e., Zr/Ce > 1) is resistant to the sulfur poisoning, but exhibits a low oxygen releasing ability. Therefore, in the present exhaust-gas purifying catalyst according to the second aspect of the present invention, it is preferable to employ the ceria-zirconia composite oxide whose Zr/Ce ≦ 1, further preferably 4.5 ≦ Zr/Ce ≦ 1, so that the ceria content falls in the range of from 2 to 45% by weight, further preferably from 2 to 20% by weight, with respect to the zeolite. With this arrangement, it is possible to secure a high oxygen releasing ability, and to satisfy both of the performances, i.e., the suppression of the local fuel-enrichment and the securing of the HC adsorbing ability. Thus, the NOₓ purifying ability is further improved.

As for the noble metal, it is possible to employ platinum (Pt), rhodium (Rh), palladium (Pd) and iridium (Ir) independently or employ a plurality of them combinedly. Moreover, in a certain case, a base metal, such as iron, cobalt and nickel, can be employed along with the noble metal. The noble metal can be loaded outside the pores of the zeolite, on the metallic oxide support or on the oxygen storage-and-release member Moreover, the loading amount of the noble metal can be appropriately determined in the range of from 0.05 to 20 g with respect to 1 L of the present exhaust-gas purifying catalyst.

In the present production process according to the third aspect of the present invention, the noble metal compound whose molecular diameter is larger than the pore diameter of the zeolite is employed to load the noble metal. Hence, it is difficult for the noble metal compound to get into the pores of the zeolite. Accordingly, the noble metal is loaded outside the pores of the zeolite. As a result, it is possible to stably and readily produce the present exhaust-gas purifying catalyst.

Since the pores of the zeolite have pore diameters falling in the range of from 0.4 nm or more to 1 nm or less, any noble metal compound can be employed which has a molecular diameter of exceeding 0.6 nm, further preferably falling in the range of from 0.8 to 8 nm, and which can be made into a solution. Such a noble metal compound can be a colloid, a multi-nuclei complex salt and a complex with enlarged ligands. For example, the following can be employed: a hexaammine platinum hydroxide salt whose molecular diameter falls in the range of from 0.6 to 0.7 nm; and a platinum colloid whose colloidal diameter falls in the range of from 2 to 4 nm. Moreover, the noble metal can be loaded by either of a powder loading method or an impregnation loading method. In the powder loading method, a zeolite powder is impregnated by using a solution of the noble metal compounds, and is thereafter calcined. In the impregnation loading method, a honeycomb support which is provided with a coating layer composed of a zeolite is employed, is adsorbed with the solution, and is thereafter calcined.

In the present exhaust-gas purifying catalyst according to the fourth aspect of the present invention, the catalyst carrier layer is formed mainly on portions excepting the pores of the oxide support. Since the noble metal is loaded preferentially on the catalyst carrier layer, the noble metal can be loaded in a sufficient amount regardless of the Si/Al ratio of a zeolite. Therefore, even when a zeolite of a large Si/Al ratio is used, it is possible to load the noble metal in a sufficient amount. Thus, it is possible to simultaneously satisfy the suppression the sintering of the noble metal, which is caused by the elimination of Al, and the loading of the noble metal in a highly dispersed manner.

Moreover, most of the noble metal is loaded on the catalyst carrier layer, and accordingly the noble metal is inhibited from being loaded in the pores of the oxide support. Thus, the HC poisoning of the noble metal is less likely to occur. As a result, the present exhaust-gas purifying catalyst is improved in terms of the NOₓ purifying ability.

Whilst, HC contained in an exhaust gas is preferentially adsorbed in the pores of the oxide support on which no catalyst carrier layer is formed, and is released therefrom at elevated temperatures. Accordingly, even in an oxygen-rich exhaust gas, the atmosphere adjacent to the catalyst is the stoichiometric atmosphere or a fuel-rich atmosphere in which HC is present abundantly. Consequently, by the catalytic action of the noble metal, HC adsorbed in the pores and released therefrom react with NOₓ. Thus, NOₓ is reduced and purified. Moreover, when HC is released, the released HC is likely to contact with the noble metal which is loaded on the catalyst carrier layer. Thus, the present exhaust-gas purifying catalyst is further improved in term of the NOₓ purifying ability.

In the present production process according to the fifth aspect of the present invention, a step of preparing an alcohol solution is first carried out. The alcohol solution includes an oxide support powder, having pores of molecular levels, and a metallic alkoxide. Subsequently, a step of hydrolyzing the metallic alkoxide in the alcohol solution is carried out. Then, a step of drying and calcining the resulting mixture is carried out, thereby forming a catalyst carrier layer, which includes a metallic oxide, on the surface of the oxide support powder Finally, a step of loading a noble metal on the catalyst carrier layer is carried out. The present production step is characterized in that a metallic alkoxide whose molecular diameter is larger in the alcohol solution than the diameters of the pores of the oxide support powder is employed as the metallic alkoxide.

Hence, it is difficult for the molecules of the metallic alkoxide to intrude into the pores of the oxide support. Accordingly, the catalyst carrier layer is formed on the surface of the oxide support excepting the pores. Consequently, the noble metal is loaded preferentially on the catalyst carrier layer so that the noble metal is inhibited from being loaded in the pores of the oxide support. Thus, the noble metal is kept from being subjected to the HC poisoning. As a result, the resulting exhaust-gas purifying catalyst is improved in terms of the NOₓ purifying activity.

In the exhaust-gas purifying catalyst according to the fourth aspect of the present invention, the oxide support can be analcimes, soadlites, type "A" zeolites, heugecites, natrolites, mordenites or heulandites. Moreover, the oxide support can be a zeolite which is selected from the group consisting of synthesized zeolites whose structures have not been determined yet. In addition, the oxide support can be a porous substance which includes at least one member selected from the group consisting of alumina, silica, zirconia, titania and silica-alumina, and which has pores of molecular levels. Among these substances, it is especially preferred to employ a zeolite which exhibits a high HC adsorbing ability.

When a zeolite is employed as the oxide support, it is possible to employ a high silica-content zeolite whose Si/Al molar ratio falls in the range of from 40 or more to less than 1,000. The Si/Al molar ratio is converted into an SiO₂/Al₂O₃ molar ratio of from 80 or more to less than 2,000. With this arrangement, it is possible to suppress the sintering of the noble metal which is caused by the elimination of Al.

As for the catalyst carrier layer, it is possible to employ γ-alumina, silica, zirconia or titania. Among these oxides, it is especially preferred to employ γ -alumina which is good in the noble-metal adsorbing ability. Moreover, it is possible to employ a composite oxide of these oxides.

It is preferred to form the catalyst carrier layer in an amount of from 0.5 to 20 parts by weight with respect to 100 parts by weight of the oxide support. When the catalyst carrier layer is formed in an amount of more than the upper limit, the catalyst carrier layer may be formed even in the pores of the oxide support, and it may be difficult to suppress the sintering of the noble metal. When the catalyst carrier layer is formed in an amount of less than the lower limit, it may be difficult to load the noble metal in a sufficient amount.

As for the noble metal, platinum (Pt) can be used. Besides Pt, it is possible to employ at least one member selected from the group consisting of rhodium (Rh), palladium (Pd) and iridium (Ir). Similarly to conventional catalysts, the loading amount of the noble metal can preferably fall in the range of from 0.1 to 20 g with respect to 1 L of the summed volume of the oxide support and the catalyst carrier layer. When the loading amount of the noble metal is less than the lower limit, the resulting catalyst is insufficient in the purifying performance. When the loading amount is more than the upper limit, such a loading amount results in saturating the catalytic effect and pushing up the manufacturing cost.

In the present production process according to the fifth aspect of the present invention, the oxide support powder having pores of molecular levels can be analcimes, soadlites, type "A" zeolites, heugecites, natrolites, mordenites or heulandites. Moreover, the oxide support powder can be a zeolite which is selected from the group consisting of synthesized zeolites whose structures have not been determined yet. In addition, the oxide support powder can be a porous substance which includes at least one member selected from the group consisting of alumina, silica, zirconia, titania and silica-alumina, and which has pores of molecular levels. Among these substances, it is possible to employ a high silica-content zeolite which exhibits a high HC adsorbing ability, and whose Si/Al molar ratio falls in the range of from 40 or more to less than 1,000. The Si/Al molar ratio is converted into an SiO₂/Al₂O₃ molar ratio of from 80 or more to less than 2,000.

For example, ferrierite has an average pore diameter of 4.8 Å. ZSM-5 has an average pore diameter of 5.5 Å. Mordenite has an average pore diameter of 7 Å. US-Y (i.e., type "Y" zeolite) has an average pore diameter of 7.8 Å. Zeolite β has an avenge pore diameter of 8.0 Å. All of these substances have pores of molecular levels.

As for the metallic alkoxide, a metallic alkoxide is employed whose molecular diameter is larger in the alcohol solution than the diameters of the pores of the oxide support powder, and which is hydrolyzed, dried and calcined to form the aforementioned catalyst carrier layer on the surface of the oxide support. For instance, when ZSM-5 is employed as the oxide support, ZSM-5 has an avenge pore diameter of 5.5 Å. Accordingly, it is possible to employ tetra-propoxide, tetra-secondary-propoxide or tri-secondary-propoxide which has a molecular diameter larger than the avenge pore diameter.

As for the metal constituting the metallic alkoxide, it is possible to select at least one member or a plurality of members from the group consisting of Al, Si, Zr and Ti. Among the members, it is especially preferred to employ an aluminum alkoxide, because the aluminum alkoxide is turned into γ -alumina which is good in the noble-metal adsorbing ability.

In the step of hydrolyzing the metallic alkoxide, the metallic alkoxide can be hydrolyzed by simply stirring it in air while using water contained in the air for the hydrolysis. Alternatively, the metallic alkoxide can be hydrolyzed by adding water to it. Since the molecular diameter of the metallic alkoxide is larger than the diameters of the pores, the metallic alkoxide cannot intrude into the pores, and is hydrolyzed outside the pores. Accordingly, the metallic hydroxide, which is generated by the hydrolysis, precipitates outside the pores. Thus, by drying and calcining the resulting metallic hydroxide, the catalyst carrier layer is formed on portions excepting the pores of the oxide support.

The step of loading the noble metal on the catalyst carrier layer can be carried out by an adsorption loading method. In the adsorption loading method, a solution, in which a compound of the noble metal is solved, is brought into contact with the catalyst carrier layer. As for the noble metal, platinum (Pt) can be used. Besides Pt, it is possible to employ at least one member selected from the group consisting of rhodium (Rh), palladium (Pd) and iridium (Ir). As for the compound of the noble metal, it is possible to employ a nitrate, a chloride or an ammine complex.

The present invention will be hereinafter described in detail with reference to the examples and the comparative examples.

### Example No. 1

100 parts by weight of a commercially available ZSM-5 powder, 50 parts by weight of a silica powder, 10 parts by weight of a ceria-zirconia composite oxide, 170 parts by weight of a silica sol, and 70 parts by weight of pure water were mixed, thereby preparing a slurry. The Si/Al molar ratio of the ZSM-5 powder was 40 (i.e., Si/Al = 40), and the average pore diameter thereof was 0.55 nm. The Zr/Ce molar ratio of the ceria-zirconia composite oxide was 1/4 (i.e., Zr/Ce = 1/4). The solid content of the silica sol was 65 parts by weight.

A honeycomb support substrate made of cordierite was prepared. The honeycomb support substrate had a diameter of 35 mm and a length of 50 mm. The honeycomb support substrate was immersed into the slurry, and was thereafter taken up out of the slurry. Then, the honeycomb support substrate was dried and calcined, thereby forming a coating layer in an amount of 200 g with respect to 1 L of the honeycomb support substrate. Then, an aqueous solution of a hexaammine platinum hydroxide salt was impregnated into the coating layer in a predetermined amount. The aqueous solution of the hexaammine platinum hydroxide salt had a predetermined concentration, and the hexaammine platinum hydroxide salt had a molecular diameter of from 0.6 to 0.7 nm in the aqueous solution. The honeycomb support was dried at 120 °C for 2 hours, and was further calcined at 300 °C for 2 hours, thereby loading Pt on the coating layer. The loading amount of Pt was 2 g with respect to 1 L of the honeycomb support substrate.

### Example No. 2

A honeycomb support substrate was prepared, and was provided with a coating layer which was prepared in the same manner as Example No. 1. An aqueous solution of a platinum colloid was impregnated into the coating layer in a predetermined amount. The aqueous solution of the platinum colloid had a predetermined concentration, and the platinum colloid had a colloidal diameter of 2 nm in the aqueous solution. The honeycomb support substrate was dried at 120 °C for 2 hours, and was further calcined at 300 °C for 2 hours, thereby loading Pt on the coating layer. The loading amount of Pt was 2 g with respect to 1 L of the honeycomb support substrate.

### Example No.3

A silica powder was prepared, and was identical with the silica powder employed in Example No. 1. 45 parts by weight of the silica powder was mixed with 100 parts by weight of an aqueous solution of a hexaammine platinum hydroxide salt. The aqueous solution of the hexaammine platinum hydroxide salt had a concentration of 4% by weight. The mixture was stirred for 1 hour. Thereafter, the mixture was kept heated at 100 °C, thereby evaporating the water content to dry. The residue was dried at 120 °C for 2 hours, and was further calcined at 300 °C for 2 hours, thereby loading Pt on the silica powder. The loading amount of Pt was 8.8% by weight.

50 parts by weight of the thus prepared silica powder loaded with Pt, 100 parts of a commercially available ZSM-5 powder, 10 parts by weight a ceria-zirconia composite oxide, 170 parts by weight of a silica sol, and 170 parts by weight of pure water were mixed, thereby preparing a slurry. The Si/Al molar ratio of the ZSM-5 powder was 40 (i.e., Si/Al = 40), and the average pore diameter thereof was 0.55 mm. The Zr/Ce molar ratio of the ceria-zirconia composite oxide was 1/4 (i.e., Zr/Ce = 1/4). The solid content of the silica sol was 65 parts by weight. Then, a coating layer was formed on the surface of a honeycomb support substrate in the same manner as Example No. 1. The loading amount of Pt was 2 g with respect to 1 L of the honeycomb support substrate.

### Comparative Example No. 1

A honeycomb support substrate was prepared, and was provided with a coating layer which was prepared in the same manner as Example No. 1. An aqueous solution of a tetraammine platinum hydroxide salt was impregnated into the coating layer in a predetermined amount. The aqueous solution of the tetraammine platinum hydroxide salt had a predetermined concentration, and the tetraammine platinum hydroxide salt had a molecular diameter of from 0.4 to 0.6 nm in the aqueous solution. The honeycomb support substrate was dried at 120 °C for 2 hours, and was further calcined at 300 °C for 2 hours, thereby loading Pt on the coating layer. The loading amount of Pt was 2 g with respect to 1 L of the honeycomb support substrate.

### Examination and Evaluation

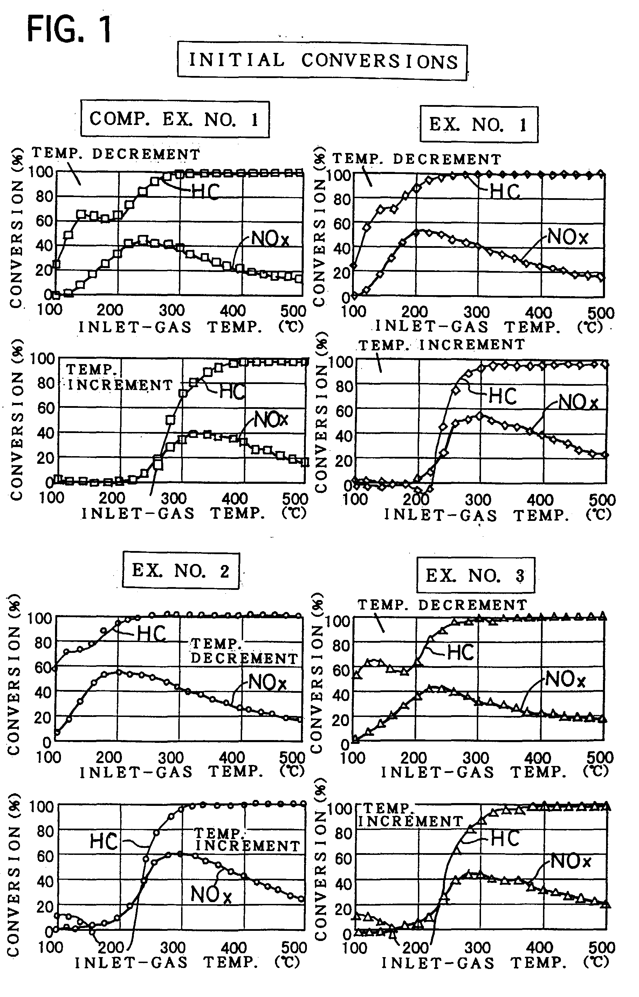

The above-described respective honeycomb catalysts were disposed in testing apparatuses. A model gas whose composition is set forth in Table 1 below was flowed in the respective testing apparatuses. The respective honeycomb catalysts were examined for the initial conversions of HC and NOₓ in the inlet-gas temperature range of from 100 to 500 °C. Note that the initial conversions of HC and NOₓ were measured, respectively, while increasing the inlet-gas temperature and while decreasing the inlet-gas temperature. The results are illustrated in Fig. 1.

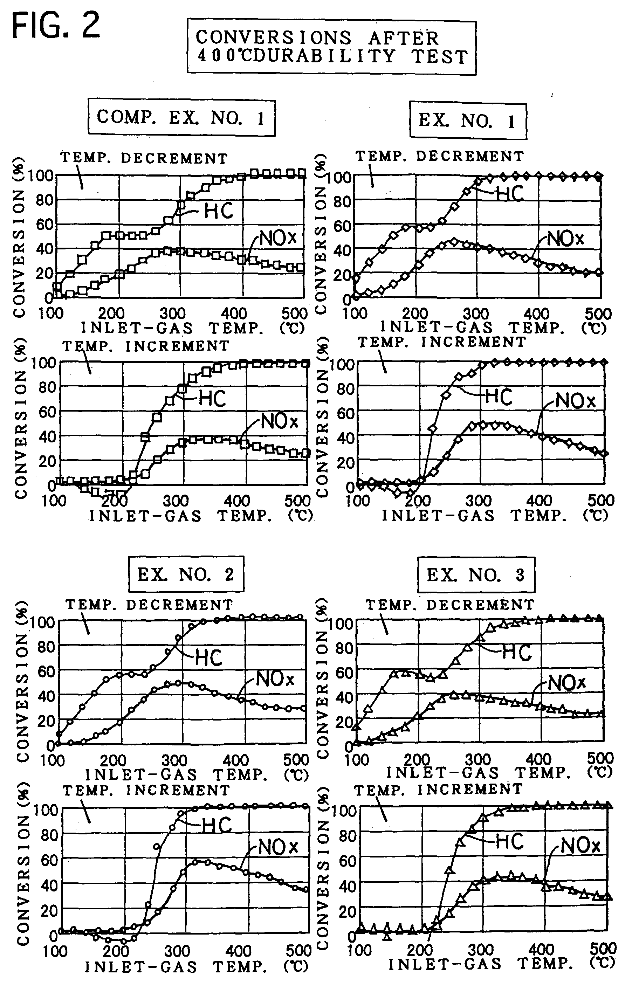

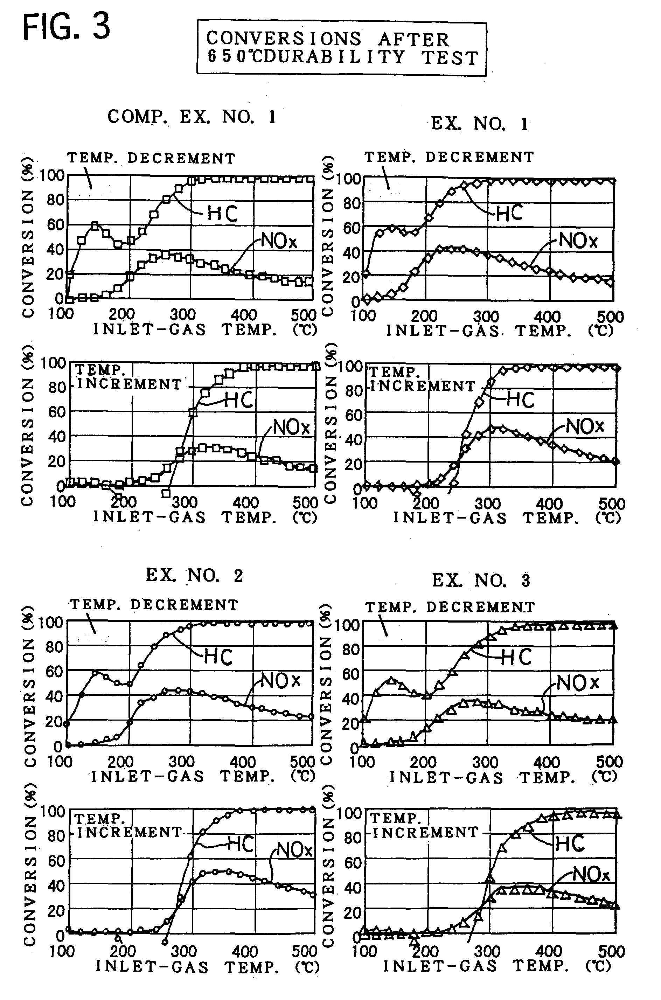

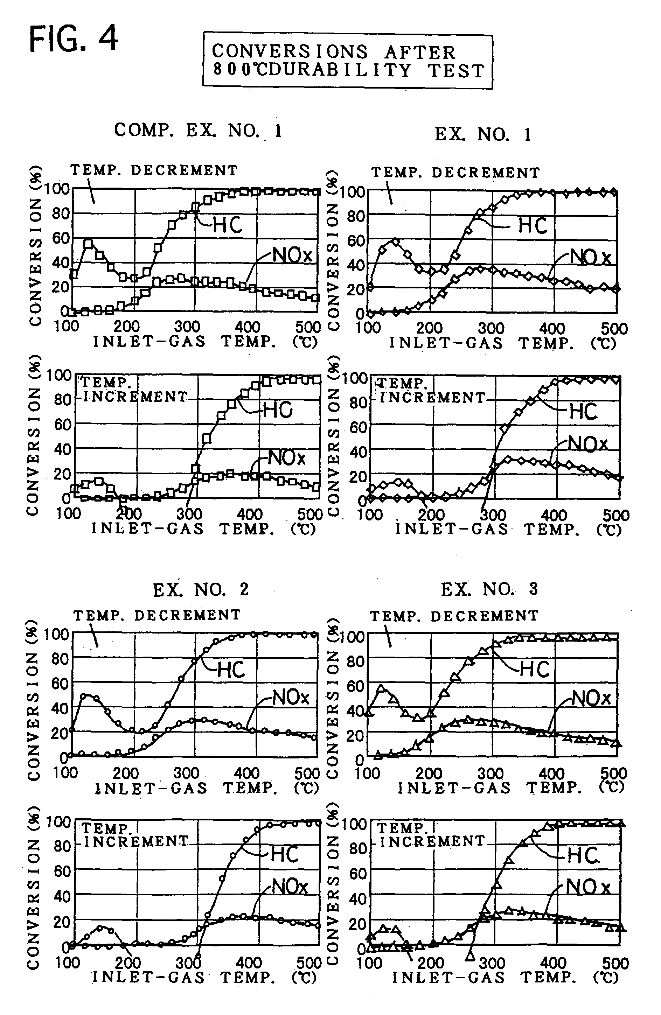

Moreover, another sets of the respective honeycomb catalysts were disposed in testing apparatuses. The same model gas was flowed in the respective testing apparatuses at a flow rate of 38 L/min. while adjusting the catalyst inlet-gas temperature at 400 °C, 650 °C and 850 °C, respectively, for 3 hours. Thus, durability tests were carried out. Then, the respective honeycomb catalysts were examined for the conversions of HC and NOₓ after the durability tests in the same manner as the examinations for the initial conversions of HC and NOₓ. The results are illustrated in Figs. 2 through 4.

**TABLE 1**

| | HC (ppmC) | CO (ppm) | CO₂ (%) | NOₓ (ppm) | H₂O (%) | SO₂ (ppm) | O₂ (%) | N₂ |
|---|---|---|---|---|---|---|---|---|
| Model Gas | 2,000 | 150 | 6.7 | 300 | 5 | 300 | 10 | Balance |

It is understood from Fig. 1 that the exhaust-gas purifying catalysts of Example Nos. 1 through 3 were improved over Comparative Example No. 1 in terms of the initial NOₓ conversions in both of the case where the inlet-gas temperature was increased and the case where the inlet-gas temperature was decreased. Moreover, it is understood from Figs. 2 through 4 that Example Nos. 1 through 3 were also improved over Comparative Example No. 1 in terms of the NOₓ conversions after the durability tests. Hence, Example Nos. 1 through 3 were good in the durability. These advantages apparently result from the arrangement that, when Pt is loaded, Pt is loaded outside the pores of the zeolite by using the platinum compounds of large molecular diameters. Note that the catalyst of Example No. 3 exhibited the NOₓ conversions lower than the catalysts of Example Nos. 1 and 2 did. This implies that it is more preferable to load Pt by impregnating the aqueous solution into the coating layer, which is composed of the mixture powder, than to first load Pt on the silica powder and then mix the Pt-loaded silica powder with the zeolite.

### Example No. 4

A type "H" ZSM-5 (40) powder was dried at 110 °C for 6 hours or more. The type "H" ZSM-5 (40) powder had an Si/Al molar ratio of 40 (i.e., Si/Al = 40), and had an avenge pore diameter of 5.5 Å. 30 g of the type "H" ZSM-5 (40) powder was added to 200 ml of isopropyl alcohol, and was stirred therein.

Whilst, a solution is prepared separately by solving 6 g of zirconium tetra-isopropoxide into 100 ml of isopropyl alcohol. The solution was mixed with the ZSM-5 dispersion prepared as aforementioned, and the resulting mixture was held at 80 °C. Pure water was dropped to the mixture, and was stirred at 80 °C for 3 hours to fully carry out a hydrolysis reaction.

The resulting sol was washed with ethanol to remove unreacted zirconium tetra-isopropoxide. Thereafter, the sol was dried at 110 °C for 6 hours, and was calcined at 600 °C for 3 hours. Thus, a ZSM-5-Zr powder was obtained.

Then, the resulting ZSM-5-Zr powder was mixed with an aqueous solution of a tetraammine platinum hydroxide salt. The concentration of the aqueous solution of the tetraammine platinum hydroxide salt was adjusted so that the loading amount of Pt was 1.6% by weight. The mixture was stirred at room temperature for 2 hours, and was filtered thereafter. The resulting cake was dried at 110 °C, and was calcined at 300 °C for 3 hours. Thus, Pt was loaded on the ZSM-5-Zr powder.

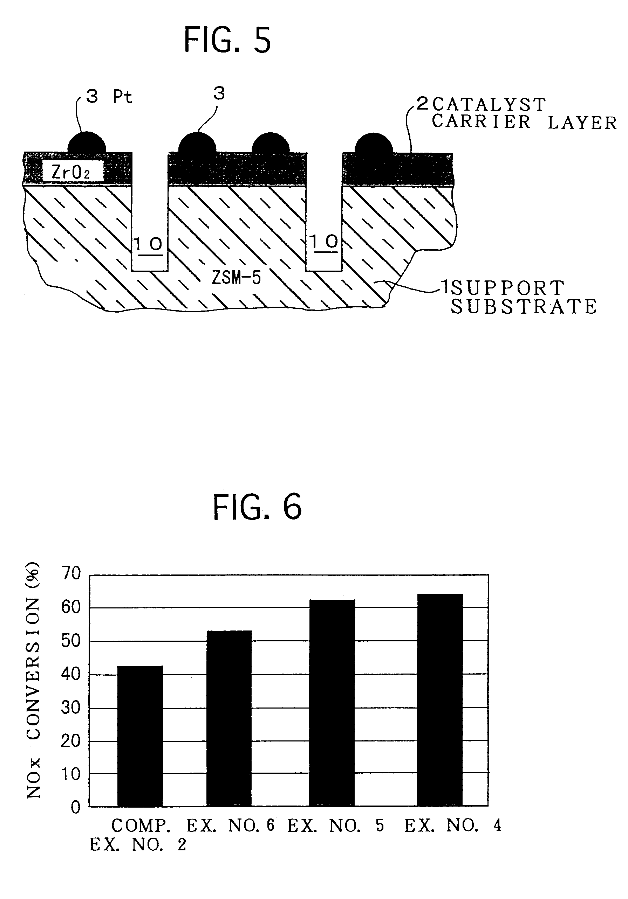

Fig. 5 illustrates the schematic cross-sectional view of the resulting catalyst powder As illustrated in the drawing, a catalyst carrier layer 2 which included ZrO₂ was formed on the surface of the support substrate 1 which included the ZSM-5, and Pt 3 was loaded on the catalyst carrier layer 2. No catalyst carrier layer 2 was formed in the pores 10 of the support substrate 1, and accordingly no Pt was loaded therein.

This catalyst powder was disposed in a testing apparatus in an amount of 1 g. The NOₓ conversions exhibited by the catalyst powder were measured by using a model gas whose composition is set forth in Table 2 below. The total gas flow rate was 7L/min., and the inlet-gas temperature was varied to a plurality of levels in the range of from 100 to 500 °C. Note that the NOₓ conversions were calculated from the differences between the NOₓ concentrations in the inlet gas and the NOₓ concentrations in the outlet gas. Then, the maximum NOₓ conversion was determined in the inlet-gas temperature range of from 100 to 500 °C. The result is illustrated in Fig. 6.

**TABLE 2**

| Component | NO | C₃H₆ | CO | CO₂ | O₂ | H₂O | N₂ |
|---|---|---|---|---|---|---|---|
| Concentration | 250 ppm | 2,000 ppm | 150 ppm | 6.7% | 10% | 3% | Balance |

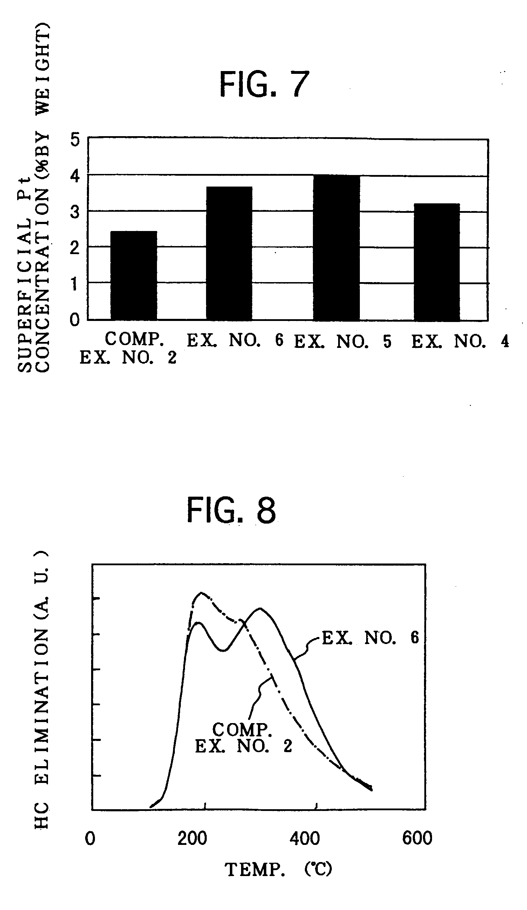

In addition, the catalyst powder was examined for the superficial Pt concentration down to the depth of dozens of Å by an XPS (X-ray Photoelectron Spectroscopy) method. The result is illustrated in Fig. 7.

### Example No. 5

Instead of the isopropyl alcohol, secondary-propylalcohol was used. Instead of the zirconium tetra-isopropoxide, titanium tetra-secondary-propoxide was used. Except these arrangements, a ZSM-5-Ti powder was prepared in the same manner as Example No. 4. Then, Pt was loaded on the ZSM-5-Ti powder in the same manner as Example No. 4.

The thus prepared catalyst powder was examined for the maximum NOₓ conversion and the superficial Pt concentration in the identical fashion with Example No. 4. The results are illustrated in Figs. 6 and 7, respectively.

### Example No. 6

Instead of the isopropyl alcohol, 2-propylalcohol was used. Instead of the zirconium tetra-isopropoxide, aluminum tetra-2-propoxide was used. Except these arrangements, a ZSM-5-Al powder was prepared in the same manner as Example No. 4. Then, Pt was loaded on the ZSM-5-Al powder in the same manner as Example No. 4.

The thus prepared catalyst powder was examined for the maximum NOₓ conversion and the superficial Pt concentration in the identical fashion with Example No. 4. The results are illustrated in Figs. 6 and 7, respectively.

### Comparative Example No. 2

A type "H" ZSM-5 (40) powder was dried at 110 °C for 6 hours or more. Then, an aqueous solution of a tetraammine platinum hydroxide salt was added to the type "H" ZSM-5 (40) powder. The concentration of the aqueous solution of the tetraammine platinum hydroxide salt was adjusted so that the loading amount of Pt was 1.6% by weight. The mixture was stirred at room temperature for 2 hours, and was filtered thereafter. The resulting cake was dried at 110 °C, and was calcined at 350 °C for 3 hours. Thus, a ZSM-5 powder with Pt loaded thereon was prepared.

The thus prepared catalyst powder was examined for the maximum NOₓ conversion and the superficial Pt concentration in the identical fashion with Example No. 4. The results are illustrated in Figs. 6 and 7, respectively.

### Evaluation

It is understood from Fig. 6 that the catalysts of Example Nos. 4 through 6 were improved over that of Comparative Example No. 2 in terms of the NOₓ conversion. In particular, the catalysts of Example Nos. 4 and 5 exhibited high NOₓ purifying abilities. This advantage is believed to result from the following arrangements. As illustrated in Fig. 5, the Pt is hardly loaded in the pores in the catalysts of Example Nos. 4 through 6, and is accordingly inhibited from being subjected to the HC poisoning.

As can be appreciated from Fig. 7, all of the catalysts of Example Nos. 4 through 6 exhibited higher superficial Pt concentrations than that of Comparative Example No. 2. Thus, Fig. 7 clearly illustrates the advantage which is effected by forming the catalyst carrier layers on portions excepting the pores of the oxide support.

Moreover, the catalysts of Example No. 6 and Comparative Example No. 2 were examined for the HC eliminations. The conditions of the examinations were as hereinafter described. A mixture gas was prepared, and included propane in an amount of 2,000 ppm and the balance of nitrogen. The mixture gas was heated to 100 °C, and was flowed in the respective catalysts at a flow rate of 7 L/min. for 30 minutes. Thereafter, the other gas containing only nitrogen was flowed in the respective catalysts at a flow rate of 7 L/min. for 15 minutes. Finally, the temperature of the other gas was increased up to 500 °C at a rate of 20 °C/min. Then, the amount of HC eliminating from the respective catalysts were measured. The results of the measurements are illustrated in Fig. 8.

It is seen from Fig. 8 that the HC elimination temperature was moved to higher temperature ranges in the catalyst of Example No. 6 than in that of Comparative Example No. 2. Accordingly, the catalyst of Example No. 6 eliminated HC in a greater amount than that of Comparative Example No. 2. The thus eliminated HC could be effectively utilized in the reduction reaction of NOₓ which was generated in elevated temperature ranges. Hence, the catalyst of Example No. 6 was improved in terms of the NOₓ purifying ability.

Having now fully described the present invention, it will be apparent to one of ordinary skill in the art that many changes and modifications can be made thereto without departing from the spirit or scope of the present invention as set forth herein including the appended claims.

## Claims

1. A catalyst for purifying an exhaust gas, comprising:
a support including a zeolite, whose silicon-to-aluminum (Si/Al) molar ratio is 150 or less, and a metallic oxide support;
an oxygen storage-and-release member; and
a noble metal loaded at least on the support;
wherein said noble metal is loaded outside the pores of said zeolite.

2. The catalyst according to Claim 1, wherein said oxygen storage-and-release member includes a ceria-zirconia composite oxide whose zirconium-to-cerium (Zr/Ce) molar ratio is 1 or less; and the ceria content falls in the range of from 2 to 45% by weight with respect to said zeolite.

3. The catalyst according to Claim 1, wherein said metallic oxide support is at least one member selected from the group consisting of titania, zirconia and silica.

4. The catalyst according to Claim 1, wherein said oxygen storage-and-release member is at least one oxide selected from the group of rare-earth metal oxides and transition metal oxides.

5. The catalyst according to Claim 4, wherein said rare-earth metal oxide is at least one member selected from the group consisting of CeO₂ and PrO₄.

6. The catalyst according to Claim 4, wherein said transition metal oxide is at least one member selected from the group consisting NiO, Fe₂O₃, CuO and Mn₂O₅.

7. The catalyst according to Claim 1, wherein said noble metal is at least one member selected from the group consisting of Pt, Rh, Pd and Ir.

8. The catalyst according to Claim 1, wherein said noble metal is loaded in an amount of from 0.05 to 20 g with respect to 1 L of the catalyst.

9. A process for producing a catalyst for purifying an exhaust gas, the catalyst comprising a zeolite and a noble metal loaded on the zeolite,
wherein a noble metal compound whose molecular diameter is larger than the pore diameter of said zeolite is employed to load said noble metal.

10. The process according to Claim 9, wherein said noble metal compound has a molecular diameter of exceeding 0.6 nm.

11. The process according to Claim 9 further including a step of mixing a metallic oxide with said zeolite before loading said noble metal.

12. The process according to Claim 9 further including a step of mixing an oxygen storage-and-release member with said zeolite before loading said noble metal.

13. The process according to Claim 9, wherein said noble metal is at least one member selected from the group consisting of Pt, Rh, Pd and Ir.

14. A process for producing a catalyst for purifying an exhaust gas, comprising the steps of:
preparing an alcohol solution which includes an oxide support powder, having pores of molecular levels, and a metallic alkoxide;
hydrolyzing the metallic alkoxide in the alcohol solution;
drying and calcining the resulting mixture, thereby forming a catalyst carrier layer, which includes a metallic oxide, on the surface of the oxide support powder; and
loading a noble metal on the catalyst carrier layer;
wherein a metallic alkoxide whose molecular diameter is larger in the alcohol solution than the diameters of the pores of the oxide support powder is employed as the metallic alkoxide.

15. The process according to Claim 14, wherein said metallic alkoxide is at least one member selected from the group consisting of aluminum alkoxides, silicon alkoxides, zirconium alkoxides and titanium alkoxides.

16. The process according to Claim 14, wherein said oxide support powder is at least one member selected from the group of analcimes, soadlites, type "A" zeolites, heugecites, natrolites, mordenites and heulandites.

17. The process according to Claim 14, wherein said oxide support powder is at least one zeolite selected from the group consisting of synthesized zeolites whose structures have not been determined yet.

18. The process according to Claim 14, wherein said oxide support powder is a porous substance which includes at least one member selected from the group consisting of alumina, silica, zirconia, titania and silica-alumina, and which has pores of molecular levels.

19. The process according to Claim 14, wherein said noble metal is at least one member selected from the group consisting of Pt, Rh, Pd and Ir.
